# FASCICULE DE BREVET EUROPEEN

(11) **EP 3 728 364 B1**
(45) Date de publication et mention de la délivrance du brevet: **16.02.2022**
(21) Numéro de dépôt: 18814910.8
(22) Date de dépôt: 10.12.2018
(51) Int. Cl.: C08G 18/12, C09J 175/04, C08G 18/76, C08G 18/40, C08G 18/48

(54) **ADHESIF POLYURETHANE BI COMPOSANT POUR LAMINATION**
ZWEIKOMPONENTIGER POLYURETHANKLEBSTOFF ZUM LAMINIEREN
BI-COMPONENT POLYURETHANE ADHESIVE FOR LAMINATION

(30) Priorité: 19.12.2017 FR 1762477
(43) Date de publication de la demande: 28.10.2020
(73) Titulaire: Bostik SA, 92700 Colombes (FR)
(72) Inventeur: PARDAL, Francis, 60280 VENETTE (FR); PENET, David, 60280 VENETTE (FR)
(74) Mandataire: Arkema Patent
(86) Numéro de dépôt international: PCT/EP2018/084221
(87) Numéro de publication internationale: WO 2019/121120

(56) Documents cités:
- EP-A1- 2 468 788
- WO-A1-2012/142148

## Description

La présente invention a pour objet une composition adhésive de type polyuréthane bi composant sans solvant, qui est adaptée au complexage (ou lamination) des couches minces de matériaux notamment polymériques et/ou métalliques. Elle concerne également un film multicouche comprenant au moins 2 couches minces desdits matériaux liées entre elle par ladite composition adhésive réticulée, ainsi que l'utilisation dudit système pour la fabrication d'emballages flexibles.

Les emballages flexibles destinés au conditionnement des produits les plus divers, tels ceux fabriqués par les industries agroalimentaire, cosmétique ou de la détergence, sont généralement constitués de plusieurs couches minces (sous forme de feuilles ou de films) dont l'épaisseur est comprise entre 5 et 150 µm et qui sont constituées de différents matériaux comme le papier, un métal (par exemple l'aluminium) ou encore par des polymères thermoplastiques. Le film complexe (ou multicouche) correspondant, dont l'épaisseur peut varier de 20 à 400 µm, permet de combiner les propriétés des différentes couches individuelles de matériau (également qualifiées de "supports") et d'offrir ainsi au consommateur un ensemble de caractéristiques adaptées à l'emballage souple final comme, par exemple :
- son apparence visuelle (notamment celle des éléments imprimés présentant l'information concernant le produit emballé et destinée au consommateur),
- un effet de barrière à l'humidité atmosphérique ou aux gaz, notamment à l'oxygène,
- un contact alimentaire sans risques de toxicité ou de modification des propriétés organoleptiques des aliments emballés,
- une résistance chimique pour certains produits tels que le ketchup ou le savon liquide,
- une bonne tenue à température élevée, par exemple en cas de pasteurisation.

Pour constituer l'emballage final, le film multicouche est généralement mis en forme par thermoscellage, à une température variant d'environ 120 à 250 °C, cette dernière technique étant également utilisée pour la fermeture de l'emballage autour du produit destiné au consommateur.

Les diverses couches de matériaux qui composent le film multicouche sont combinées ou assemblées par contrecollage au cours de procédés industriels de complexage (également dénommés par le terme "lamination").

Ces procédés mettent en œuvre des adhésifs (ou colles) et des dispositifs (ou machines) conçus à cet effet. Le film multicouche ainsi obtenu est souvent lui-même qualifié par le terme "laminé".

Ces procédés comprennent tout d'abord une étape d'enduction de l'adhésif sur un premier film de matériau, qui consiste en un dépôt d'une couche de colle continue et d'épaisseur contrôlée généralement inférieure à 10 µm, correspondant à une quantité de colle (ou grammage) également contrôlée, ne dépassant pas en général 10 g/m². Cette étape d'enduction est suivie d'une étape de contrecollage d'un deuxième film de matériau, identique ou différent du premier, consistant en l'application sous pression de ce deuxième film sur le premier film recouvert de la couche de colle.

Les films complexes sont ainsi finalement obtenus en très grande largeur et sont généralement conditionnés par enroulement sous forme de larges bobines de 1 m de diamètre ayant, comme le film qu'elles stockent, jusqu'à 2 m de largeur. Ces larges bobines peuvent être stockées et transportées, en vue de leur utilisation, soit directement par les industriels de l'agroalimentaire, en vue du conditionnement de leur produit, soit par des transformateurs (ou complexeurs, désignés encore par le terme anglais de "converters") qui procèdent à la découpe du film pour en réduire la largeur, et à son façonnage pour fabriquer des sachets, eux-mêmes destinés à l'emballage d'un article, par exemple par les industriels de l'agroalimentaire.

Les adhésifs de lamination de type polyuréthane bicomposant sans solvant sont largement utilisés comme colle pour la fabrication de systèmes multicouches destinés au domaine de l'emballage flexible. En effet ces adhésifs qui ne contiennent ni solvant organique ni eau présentent l'avantage de pouvoir être mis en œuvre dans les opérations industrielles de complexage à des vitesses de ligne très élevées. Cela est dû précisément au fait qu'il n'y a pas de solvant organique ou d'eau à éliminer, ce qui évite ainsi une étape d'élimination additionnelle par passage du complexe dans un four, ou par tout autre moyen.

Les adhésifs de lamination de type polyuréthane bicomposant sans solvant sont fournis au complexeur, pour mise en œuvre du procédé de complexage, sous la forme de 2 compositions (ou composants) :
- l'un (appelé composant -NCO) contenant des entités chimiques porteuses de groupements terminaux isocyanates, et
- l'autre (appelé composant -OH) contenant des entités chimiques porteuses de groupements terminaux hydroxyles.

Le mélange de ces 2 composants est réalisé à chaud à une température comprise entre 30 et 80 °C par l'opérateur de la machine de complexage (préalablement à sa mise en route), ce qui permet, grâce à une viscosité appropriée, le fonctionnement correct de celle-ci.

A l'issue de l'enduction du mélange ainsi obtenu et du procédé de complexage, les groupements isocyanate du composant -NCO réagissent avec les groupements hydroxyle du composant -OH, selon une réaction dite de réticulation, pour former un polyuréthane qui se présente sous la forme d'un réseau tridimensionnel à groupes uréthanes, assurant la cohésion du joint adhésif entre les 2 couches minces contrecollées. La durée appropriée pour compléter cette réaction de réticulation, et assurer ainsi le niveau de cohésion requis en fonction du traitement ultérieur, est en général de l'ordre de 1 à 10 jours.

Les films complexes fabriqués selon ce type de procédé conviennent bien à la fabrication d'emballages flexibles (ou souples) en raison de leur excellent niveau de cohésion.

Les entités chimiques présentes dans le composant -OH sont généralement des composés chimiques polymériques ou non, parfois d'origine naturelle (comme l'huile de ricin), et qui incluent généralement des polymères de type polyéther polyol et/ou polyester polyol, de masse molaire comprise entre 400 et 4000 g/mole.

Les entités chimiques présentes dans le composant -NCO sont le plus souvent des composés chimiques polymériques qui sont dénommés prépolymères puisque ce sont des précurseurs du polyuréthane réticulé final constitutif du joint adhésif. Ces prépolymères à groupes terminaux -NCO sont généralement eux-mêmes des polyuréthanes produits par la réaction de polyaddition d'un excès molaire d'un monomère diisocyanate, souvent aromatique, avec des polyéther polyols et/ou polyester polyols.

Or, pour des raisons qui tiennent à la spécificité de cette réaction de polyaddition et à la présence de l'excès molaire du diisocyanate, il reste dans le composant -NCO ainsi obtenu une certaine quantité de monomère diisocyanate non réagi. Ces quantités résiduelles de monomères diisocyanates (dits libres) de faible masse moléculaire sont susceptibles de migrer à travers le film multicouche, après la mise en œuvre de l'adhésif bicomposant, et donc à travers l'emballage flexible final. Ainsi lesdits composés sont susceptibles de former par hydrolyse, au contact de l'eau ou de l'humidité présente dans les aliments ou autres produits emballés, des amines primaires aromatiques (désignées souvent par les termes anglais de Primary Aromatic Amines ou PAA), lesquelles sont considérées comme très néfastes pour la santé humaine et l'environnement.

Juste après l'opération industrielle de fabrication du film complexe, la quantité de PAA qui peut être extraite dudit film est généralement très élevée. Cette quantité décroit avec le temps, en raison de la poursuite puis de l'achèvement de la réaction de réticulation à l'intérieur de la couche adhésive du film, ce qui a pour effet de diminuer la quantité résiduelle de monomères diisocyanate libres ainsi que leur mobilité dans le film complexe et par conséquent leur possibilité de migration à l'extérieur dudit film.

Ainsi, de manière à respecter les obligations réglementaires, les industriels du complexage sont, en pratique, tenus de stocker les bobines de complexes laminés, tant que la quantité de PAA extractible dudit complexe est au-dessus de 10 ppb, ou même au-dessus de 5 ppb. Une durée de stockage allant jusqu'à 14 jours ou plus peut être nécessaire avant l'utilisation du film complexe pour la fabrication d'emballages flexibles destinés à des denrées alimentaires.

Dans un objectif d'amélioration de la productivité industrielle, il est donc très souhaitable d'accélérer la décroissance de la quantité de PAA extractible.

On connaît des documents de l'art antérieur qui s'attachent au problème liés aux PAA.

Ainsi, la demande PCT WO2013/043652 décrit une structure en couches comprenant au moins 2 couches, l'une formé à partir d'une composition comprenant un polyuréthane, en tant que couche adhésive, et l'autre, en tant que support, formée à partir d'une composition comprenant un polymère fonctionnalisé par un groupe acide, anhydride ou amine pouvant piéger les monomères diisocyanates libres. Les supports mis en œuvre sont toutefois très spécifiques.

La demande internationale WO2016/142513 divulgue un prépolymère polyuréthane à groupes terminaux -NCO, qui présente une faible teneur en monomère et peut être utilisé comme composant -NCO d'un adhésif polyuréthane bi-composant. Ledit prépolymère est obtenu en faisant réagir un polyol avec un polyisocyanate en excès, puis en faisant réagir sur le produit de cette réaction un composé ayant une fonction présentant un hydrogène acide H, réactive avec un groupe -NCO. Le prépolymère exemplifié est cependant un adhésif à base de solvant.

Le brevet US9458363 décrit une composition adhésive polyuréthane contenant un prépolymère à groupes terminaux -NCO obtenu à partir de polyols et de polyisocyanates, et un composé de poids moléculaire inférieur à 2000 g/mole ayant des groupes fonctionnels réactifs avec des groupes amines primaires. Toutefois, les compositions adhésives illustrées par ce brevet sont toutes à base de solvant.

La demande internationale WO2012/142148 décrit une composition adhésive de lamination, dont le composant -NCO est un prépolymère polyuréthane à terminaisons isocyanate obtenu à partir d'un diisocyanate de diphénylméthane modifié.

Il est toutefois toujours souhaitable d'enrichir les solutions techniques mises à la disposition des industriels du complexage.

Ainsi, la présente invention a pour but de proposer un adhésif de lamination de type polyuréthane bicomposant sans solvant qui présente, à partir du moment où il est mis en œuvre dans un procédé de complexage, une décroissance dans le temps améliorée de la quantité de PAA extractible des films complexes obtenus par ledit procédé.

Un autre but de l'invention est de proposer un adhésif de lamination de type polyuréthane bicomposant sans solvant dont les composants -NCO et -OH présentent, chacun individuellement ainsi que la composition obtenue juste après leur mélange, une viscosité appropriée à leur mise en œuvre dans les machines de complexage.

Un autre but de l'invention est de proposer un adhésif de lamination de type polyuréthane bicomposant sans solvant qui soit polyvalent, dans le sens où il puisse convenir aux supports utilisés usuellement par les complexeurs.

Un autre but de l'invention est de proposer un adhésif de lamination de type polyuréthane bicomposant sans solvant conduisant, après lamination, et notamment après lamination de supports métalliques ou métallisés, à l'obtention d'un film complexe qui présente les propriétés de cohésion requises.

Un autre but de l'invention est de proposer un adhésif de lamination de type polyuréthane bicomposant sans solvant conduisant, après lamination, à l'obtention d'un film complexe cohésif, à l'issue d'une durée de réticulation plus faible.

Il a à présent été trouvé que ces buts peuvent être atteints en totalité ou en partie, par la composition adhésive décrite ci-après.

La présente invention a donc pour objet une composition adhésive bicomposante à base de polyuréthane, comprenant un composant -NCO et un composant -OH tels que :
- le composant -NCO est une composition A comprenant des polyuréthanes prépolymères A1 comprenant au moins deux groupements terminaux -NCO, A1 étant obtenu par réaction de polyaddition entre :
   - une composition A1.C1 de diisocyanate de diphénylméthane (MDI) comprenant au moins 35 % en poids de l'isomère 4,4', ledit pourcentage étant exprimé sur la base du poids total de ladite composition, et
   - une composition A1.C2 de polyols comprenant un polyéther diol PE_{A}¹ de masse molaire Mn comprise entre 800 et 1200 g/mole et un polyéther triol PE_{A}² de masse molaire Mn comprise entre 350 et 550 g/mole, dans une quantité correspondant à un rapport poids/poids PE_{A}²/(PE_{A}¹ + PE_{A}²) compris entre 15 et 30 %,
   - les quantités de A1.C1 et A1.C2 mises en œuvre étant telles que le rapport équivalent molaire -NCO/-OH est compris entre 2,5 et 6,5 ;
- le composant -OH est une composition B comprenant des polyuréthanes prépolymères B1 comprenant au moins deux groupements terminaux -OH, B1 étant obtenu par réaction de polyaddition entre :
   - une composition B1.C1 de diisocyanate de diphénylméthane (MDI) comprenant au moins 35 % en poids d'isomère 4,4', ledit pourcentage étant exprimé sur la base du poids total de ladite composition, et
   - une composition B1.C2 de polyols de fonctionnalité 2 comprenant, sur la base du poids total de ladite composition :
      - de 38 à 42 % en poids d'une composition B1.C2.D comprenant un polyester diol aliphatique PES_{B}¹ de masse molaire Mn comprise entre 800 et 1200 g/mole et un polyester diol partiellement aromatique PES_{B}² de masse molaire Mn comprise entre 1000 et 1400 g/mole, dans une quantité correspondant à un rapport poids/poids PES_{B}¹ / PES_{B}² compris entre 0,35 et 0,45 ; et
      - de 58 à 62 % en poids d'un polyéther diol aliphatique PE_{B} de masse molaire Mn comprise entre 350 et 550 g/mole ;
   - les quantités de B1C1 et B1C2 mises en œuvre étant telles que le rapport équivalent molaire -NCO/-OH est compris entre 0,05 et 0,50 ;
- étant précisé en outre que les quantités des composants -NCO et -OH de ladite composition adhésive bicomposante sont telles que le rapport équivalent molaire -NCO / -OH est compris dans un domaine allant de 1,5 à 1,7.

Il a à présent été trouvé que la composition adhésive bicomposante selon l'invention permet d'obtenir un film complexe à durée de réticulation réduite, dont la teneur en PAA extractible est avantageusement abaissée en dessous de 5 ppb dès le 2^{ème} jour suivant sa fabrication, ce qui permet ainsi aux complexeurs de diminuer la durée de stockage de leurs bobines de films complexes, et donc leurs stocks de produits finis. De plus, ledit film présente des propriétés de cohésion tout à fait convenables et même excellentes dans le cas où l'un des supports dudit film est un support métallisé, comme par exemple un PET métallisé.

L'obtention de ces propriétés, pour le film complexe, s'accompagne d'une mise en œuvre aisée de la composition adhésive bi composante correspondante, qu'il s'agisse d'une introduction facile, au moyen d'une pompe, dans la machine de complexage des composants - NCO et -OH en raison de leurs propriétés de viscosité, ou qu'il s'agisse encore de la mise en œuvre, dans la machine de complexage elle-même, de la composition résultant du mélange desdits composants, là encore en raison d'un profil de viscosité approprié, pour ladite composition.

Enfin, la combinaison de ces propriétés avantageuses est obtenue pour une composition adhésive bicomposante qui est exempte de solvant.

### Composant -NCO :

La composition A1.C1 de MDI mise en œuvre pour la préparation de A1 comprend au moins 35 % en poids de l'isomère 4,4', sur la base de son poids total, et, de préférence, au moins 45 %.

De préférence, la teneur en isomère 2,2' de ladite composition est inférieure à 1 % en poids, sur la base de son poids total.

Selon un mode de réalisation, la composition A1.C1 comprend au moins 49 % en poids de l'isomère 4,4', et, de préférence, au moins 49 % en poids de l'isomère 2,4'. De telles compositions sont disponibles au plan commercial. On peut citer par exemple le LUPRANAT^{®} MIPI de la société DOW dont la teneur en isomère 4,4' est d'au moins 49,5 % en poids, la teneur en isomère 2,4' est d'au moins 49,3 % en poids, et la teneur en isomère 2,2' est inférieure à 0,2 %. Le pourcentage exprimé en poids/poids en groupe -NCO de ce produit est égal à 33,5 %.

Selon un autre mode de réalisation la composition A1.C1 comprend au moins 95 % en poids de l'isomère 4,4'. De telles compositions sont également disponibles au plan commercial. On peut citer par exemple l'ISONATE^{®} M125 de la société DOW dont la teneur en isomère 4,4' est d'au moins 97 % en poids, et la teneur en isomère 2,2' est inférieure à 0,1 %. Le pourcentage en groupe -NCO de ce produit (exprimé en poids/poids) est égal à 33,6 %.

Le polyéther diol PE_{A}¹ et le polyéther triol PE_{A}² mis en œuvre dans la composition de polyols A1.C2 sont de préférence choisis parmi les polyoxyalkylène-diols et polyoxyalkylène-triols, dont la partie alkylène (saturée), linéaire ou ramifiée, comprend de 2 à 4 atomes de carbone, et de préférence de 2 à 3 atomes de carbone. Ainsi des polypropylène glycol (PPG) de fonctionnalités respectives 2 (pour le polyéther diol PE_{A}¹) et 3 (pour le polyéther triol PE_{A}²) sont tout particulièrement préférés.

Les polyéther diol et triol suscités peuvent être préparés de manière conventionnelle, et/ou sont largement disponibles dans le commerce. Par exemple :
- le VORANOL^{®} 1010L, disponible auprès de DOW CHEMICAL, est un polypropylène glycol (de type diol) de masse moléculaire moyenne en nombre comprise entre 984 et 1058 g/mol, et dont l'indice hydroxyle IOH est compris entre 106 et 114 mgKOH/g ;
- le VORANOL^{®} CP450, également disponible auprès de DOW CHEMICAL, est un polypropylène glycol (de type triol) de masse moléculaire moyenne en comprise entre 425 et 455 g/mol, et dont l'indice hydroxyle IOH est compris entre 370 et 396 mgKOH/g.

L'indice hydroxyle d'un polyol (noté IOH) représente le nombre de fonctions hydroxyles par gramme de polyol et est exprimé sous la forme du nombre équivalent de milligrammes de potasse (KOH) utilisés dans le dosage des fonctions hydroxyles. L'IOH peut être mesuré expérimentalement par exemple selon la norme ISO 14900 :2001.

Selon une variante préférée, la composition A1.C2 de polyols comprend les polyéther PE_{A}¹ et PE_{A}² dans une quantité correspondant à un rapport poids/poids PE_{A}²/(PE_{A}¹ + PE_{A}²) compris entre 18 et 24 %.

Selon une variante davantage préférée, la composition A1.C2 de polyols est constituée par les polyéther diol PE_{A}¹ et polyéther triol PE_{A}².

La réaction de polyaddition entre la composition A1.C1 de MDI et la composition A1.C2 de polyols s'effectue généralement à une température comprise entre 70 et 80°C pendant une durée allant 3 à 6 heures.

Les quantités de A1.C1 et A1.C2 mises en œuvre dans la réaction de polyaddition sont telles que le rapport équivalent molaire -NCO/-OH est compris entre 2,5 et 6,5. On entend par rapport équivalent molaire -NCO/-OH le rapport du nombre équivalent de groupes -NCO (présents dans A1.C1) sur le nombre équivalent de groupes -OH (présents dans A2.C2). De préférence ledit rapport est compris entre 3,0 et 5,5 , et encore plus préférentiellement entre 3,5 et 5,0.

Généralement, la teneur pondérale des polyuréthanes prépolymères A1 en groupements terminaux -NCO (exprimée en poids desdits groupements pour 100 g de A1), varie dans un domaine allant de 9 à 18 %.

Selon un premier mode de réalisation de la composition A, en tant que composant - NCO, ladite composition est constituée essentiellement des polyuréthanes prépolymères A1 décrits ci-dessus. Par "constituée essentiellement" on entend signifier une teneur de la composition A en A1 d'au moins 98 %, et pouvant aller jusqu'à 100%.

Selon un second mode de réalisation de la composition A, ladite composition comprend également, outre les polyuréthanes prépolymères A1, un polyisocyanate aliphatique A2 dont la fonctionnalité en groupements terminaux -NCO (exprimée en nombre de moles de fonctions -NCO par mole de A2) est comprise dans un domaine allant de 2 à 3,5 et dont la teneur en -NCO, exprimée en poids sur la base du poids de A2, est comprise entre 17 et 27%.

On entend par polyisocyanate aliphatique un polyisocyanate dont les groupes terminaux -NCO sont directement reliés à des atomes de carbone non aromatiques.

On préfère un polyisocyanate aliphatique A2 obtenu par une homo- ou hétérocondensation de monomères diisocyanates aliphatiques, éventuellement avec un ou plusieurs composés à hydrogène mobile, tels que par exemple un alcool, un diol, une amine, et autre composés analogues. On entend par "homocondensation de monomères diisocyanates" un produit issu de la condensation d'un monomère diisocyanate avec lui-même. On entend par "hétérocondensation de monomères diisocyanates" un produit issu de la condensation d'au moins deux monomères diisocyanates différents entre eux, ou de la condensation d'un monomère diisocyanate et d'un composé à hydrogène mobile.

De manière encore plus préférée, le polyisocyanate aliphatique A2 est porteur d'une fonction allophanate et est obtenu selon des méthodes classiques bien connues de l'homme du métier, par réaction d'au moins un composé porteur d'une fonction hydroxyle et d'au moins deux monomères diisocyanates, généralement en présence d'un catalyseur spécifique. De tels allophanates peuvent avantageusement être préparés directement à partir d'un isocyanate et de l'alcool désiré, par chauffage en présence d'un catalyseur de type dilaurate du dibutylétain, comme indiqué dans la demande de brevet WO99/55756.

De tels polyisocyanates aliphatiques A2 sont obtenus, préférentiellement, à partir d'au moins un polyisocyanate et d'au moins un monoalcool, de préférence un alcool linéaire ou ramifié comportant de 1 à 20 atomes de carbone.

On préfère tout particulièrement les allophanates obtenus à partir des produits d'homocondensation et/ou d'hétéro-condensation de monomères isocyanates aliphatiques, et tout particulièrement l'HexaméthylèneDiIsocyanate (ou HDI) et/ou l'isocyanurate de HDI, encore dénommé HDT (pour HexaméthylèneDiisocyanate Trimère)

Parmi les produits disponibles commercialement qui sont utilisables en tant que polyisocyanate aliphatique A2, on peut citer le DESMODUR^{®} XP 2860 de la société COVESTRO qui est un polyisocyanate aliphatique basé sur l'hexaméthylènediisocyanate (HDI) et porteur d'une fonction allophanate, dont la teneur en -NCO est d'environ 20 % poids/poids et la fonctionnalité en groupes terminaux -NCO est comprise dans le domaine allant de 2 à 3,5.

Conformément à ce second mode de réalisation du composant -NCO, la teneur de A2 peut varier dans un domaine allant jusqu'à 15 % en poids, sur la base du poids total de la composition A. De manière plus préférée, la teneur en polyuréthanes prépolymères A1 peut alors varier, sur la base du poids total de la composition A, dans un domaine allant de 83 à 98 % sur la base du poids total de la composition A, ou encore de 85 à 100 %.

La composition A est alors préparée généralement par mélange des ingrédients A1 et A2, à une température d'environ 80°C, en conditions anhydres.

De manière avantageuse, la teneur totale en groupe -NCO, exprimée en % poids sur la base du poids total de la composition A, est comprise dans un domaine allant de 13 à 18 %. Cette teneur, qui peut être évaluée par calcul à partir des quantités introduites dans la préparation de la composition A, est également mesurée par un titrage chimique qui met en oeuvre la réaction de la dicyclohexylamine avec les fonctions isocyanates, puis le dosage de l'excès d'amine par de l'acide chlorhydrique.

### Composant -OH :

Le composant -OH est une composition B comprenant des polyuréthanes prépolymères B1 comprenant au moins deux groupements terminaux -OH, B1 étant obtenu par une réaction de polyaddition entre la composition B1.C2 de polyols de fonctionnalité 2 et la composition B1.C1 de diisocyanate de diphénylméthane (MDI). Cette dernière composition comprend au moins 35 % en poids d'isomère 4,4', ledit pourcentage étant exprimé sur la base du poids total de ladite composition.

La composition B1.C1 répond à la même définition que la composition A1.C1 décrite précédemment, et peut également englober les mêmes modes de réalisation préférés que celle-ci, étant entendu que les 2 compositions B1.C1 et A1.C1, lorsqu'elles sont mises en œuvre dans une composition adhésive bicomposante selon l'invention, peuvent être identiques ou différentes.

La composition B1.C2 de polyols de fonctionnalité 2 comprend, sur la base du poids total de ladite composition :
- de 38 à 42 % en poids d'une composition B1.C2.D comprenant un polyester diol aliphatique PES_{B}¹ de masse molaire Mn comprise entre 800 et 1200 g/mole et un polyester diol partiellementaromatique PES_{B}² de masse molaire Mn comprise entre 1000 et 1400 g/mole, dans une quantité correspondant à un rapport poids/poids PES_{B}¹ / PES_{B}² compris entre 0.35 et 0.45 ; et
- de 58 à 62 % en poids d'un polyéther diol aliphatique PE_{B} de masse molaire Mn comprise entre 350 et 550 g/mole.

Les polyester diol aliphatique PES_{B}¹ et polyester diol partiellement aromatique PES_{B}² peuvent être choisis parmi :
- des polyester diols issus de la polycondensation d'au moins un diacide carboxylique (ou éventuellement un de ses anhydrides ou diesters correspondants) avec au moins un diol, ou bien
- des polyester diols issus d'une polymérisation avec ouverture de cycle d'au moins une lactone cyclique avec au moins un diol, tels que les polycaprolactone polyols.

Les diacides carboxyliques utilisables pour la synthèse des polyester diols suscités sont linéaires ou ramifiés, cycliques ou acycliques, saturés ou insaturés, et comprennent de préférence de 3 à 40 atomes de carbone, et plus préférentiellement de 6 à 10 atomes de carbone. Selon qu'ils sont destinés à la synthèse d'un polyester diol aliphatique ou partiellement aromatique, lesdits diacides carboxyliques sont aliphatiques ou aromatiques.

Les diols utilisables pour la synthèse des polyester diols suscités peuvent être choisis parmi les polyalkylène diols, les polyoxyalkylène-diols, et les mélanges de ces composés, la partie alkylène (saturée) de ces composés, étant de préférence linéaire ou ramifiée, et comprenant de préférence de 2 à 40 atomes de carbone, et plus préférentiellement de 2 à 8 atomes de carbone.

Les lactones cycliques utilisables pour la synthèse des polyester diols suscités comprennent de préférence de 3 à 7 atomes de carbone.

Les polyester diol aliphatique PES_{B}¹ et polyester diol partiellement aromatique PES_{B}² peuvent être préparés de manière conventionnelle, et/ou sont largement disponibles dans le commerce. On peut ainsi citer :
- le DEKATOL^{®} 3008 qui est un polyester diol aliphatique disponible auprès de la société BOSTIK, dont la masse moléculaire moyenne en nombre est comprise entre 967 et 1039 g/mole, et dont l'indice hydroxyle IOH est compris entre 108 et 116 mgKOH/g ;
- le DEKATOL^{®} 1105 qui est un polyester diol partiellement aromatique, disponible auprès de la société BOSTIK, dont la masse moléculaire moyenne en nombre est comprise entre 1069 et 1247 g/mole, et dont l'indice hydroxyle IOH est compris entre 90 et 105 mgKOH/g.

Selon une variante préférée, la composition B1.C2.D est constituée des polyester diols PES_{B}¹ et PES_{B}².

La composition B1.C2 comprend également un polyéther diol aliphatique PE_{B} de masse molaire Mn comprise entre 350 et 550 g/mole. Ledit polyéther est choisi parmi les polyoxyalkylène-diols dont la partie alkylène (saturée), linéaire ou ramifiée, comprend de 2 à 4 atomes de carbone, et de préférence de 2 à 3 atomes de carbone. Ainsi des polypropylène glycol (PPG) de fonctionnalités respectives 2 sont tout particulièrement préférés.

De tels polyéther diols sont largement disponibles dans le commerce. Par exemple :
- le VORANOL^{®} P400, disponible auprès de DOW CHEMICAL, est un polypropylène glycol diol de masse moléculaire moyenne en nombre comprise entre 416 et 449 g/mol, et dont l'indice hydroxyle IOH est compris entre 250 et 270 mgKOH/g.

Selon une variante préférée, la composition B1.C2 est constituée de la composition B1.C2.D et du polyéther PE_{B}.

La réaction de polyaddition entre la composition B1.C1 de MDI et la composition B1.C2 de polyols s'effectue généralement à une température comprise entre 70 et 80°C pendant une durée allant 3 à 6 heures.

Les quantités de B1.C1 et B1.C2 mises en œuvre dans la réaction de polyaddition sont telles que le rapport équivalent molaire -NCO/-OH est compris entre 0,05 et 0,50, de préférence entre 0,1 et 0,4 et encore plus préférentiellement entre 0,2 et 0,3. On entend par rapport équivalent molaire -NCO/-OH le rapport du nombre équivalent de groupes -NCO (présents dans B1.C1) sur le nombre équivalent de groupes -OH (présents dans B2.C2).

Selon un mode de réalisation préféré de la composition B, en tant que composant - OH, ladite composition est constituée essentiellement des polyuréthanes prépolymères B1 décrits ci-dessus. Par "constituée essentiellement" on entend signifier une teneur de la composition B en B1 d'au moins 98 %, et pouvant aller jusqu'à 100%.

De manière avantageuse, la teneur en groupe -OH, exprimée en % poids sur la base du poids total de la composition B, est comprise dans un domaine allant de 3 à 5 %.

Cette teneur peut être évaluée par calcul, à partir des quantités pondérales des diols introduits avec la composition B1.C2., de l'IOH desdits diols, et de la quantité pondérale de MDI.

Cette teneur peut également être déterminée expérimentalement par simple mesure de l'IOH de la composition B, autrement dit par la détermination de la quantité de KOH (exprimée en mg) nécessaire pour neutraliser l'acide acétique formé après réaction d'un excès d'anhydride acétique sur 1 g de composition B.

### Composition adhésive bicomposante :

Les teneurs des composants -NCO et -OH dans la composition adhésive bicomposante selon l'invention sont telles que le rapport équivalent molaire -NCO / -OH est compris dans un domaine allant de 1,5 à 1,7. On entend par rapport équivalent molaire -NCO/- OH le rapport du nombre équivalent de groupes -NCO (présents dans le composant -NCO) sur le nombre équivalent de groupes -OH (présents dans le composant -OH).

La viscosité mesurée à 23°C de chacun des 2 composants -NCO et -OH est avantageusement inférieure ou égale à 25 Pa.s. Ladite viscosité est également mesurée à l'aide d'un viscosimètre Brookfield selon la norme ISO 2555, publiée en 1999. Chacun des 2 composants, qui sont en pratique stockés séparément dans des réservoirs de capacité appropriée (par exemple des fûts de 200 1), peut être ainsi commodément introduit au moyen d'une pompe dans la machine de complexage.

Le mélange de ces 2 composants, dans le rapport indiqué, est réalisé à chaud à une température comprise entre 40 et 80 °C par l'opérateur de la machine de complexage, préalablement à sa mise en route.

Avantageusement, la viscosité mesurée à 50°C de la composition adhésive bicomposante ainsi obtenue est, au moment du mélange, comprise dans un domaine allant de 500 à 2000 mPa.s, de préférence de 500 à 1500 mPa.s. La viscosité de ladite composition adhésive est ainsi tout à fait adaptée à sa mise en œuvre dans une machine de complexage et à un fonctionnement correct de celle-ci. La viscosité est mesurée à l'aide d'un viscosimètre Brookfield selon la norme ISO 2555, publiée en 1999.

La composition adhésive bicomposante selon l'invention peut en outre comprendre des additifs pouvant être compris dans le composant -NCO et/ou dans le composant -OH, tels que des promoteurs d'adhésion (comme par exemple des alcoxysilanes), des additifs rhéologiques, des catalyseurs ou encore des plastifiants. La teneur totale de ces additifs optionnels, dans chacun des composants -NCO et/ou-OH, peut aller jusqu'à 2 % en poids, sur la base du poids total du composant considéré.

La composition adhésive bicomposante selon l'invention est avantageusement substantiellement exempte de solvant. On entend par ces termes que la teneur en solvant dudit adhésif ne dépasse pas 1 % poids/poids, et de préférence 0,05 %.

### Film multicouche :

L'invention concerne également un film multicouche (ou complexe) comprenant 2 couches minces de matériau liées entre elles par une couche continue, caractérisé en ce que ladite couche est constituée par la composition adhésive bicomposante selon l'invention à l'état réticulé, à raison d'une quantité inférieure à 10 g/m².

Selon une variante de l'invention, ladite quantité est inférieure ou égale à 7 g/m², et est comprise, de préférence, dans un domaine allant de 0,5 à 2,5 g/m², et encore plus préférentiellement allant de 1 à 2 g/m².

Les matériaux dont sont constituées les couches minces entourant la couche adhésive sont généralement choisis parmi le papier, un métal, comme par exemple l'aluminium ou les polymères thermoplastiques tels que :
- le polyéthylène (PE),
- le polypropylène (PP),
- un copolymère à base d'éthylène et de propylène,
- le polyamide (PA), et notamment le polyamide bi-orienté (ou OPA ou BOPA)
- le polyéthylènetéréphtalate (PET), ou encore
- un copolymère à base d'éthylène comme par exemple un copolymère greffé anhydride maléïque, un copolymère d'éthylène et d'acétate de vinyle (EVA), un copolymère d'éthylène et d'alcool vinylique (EVOH), un copolymère d'éthylène et d'un acrylate d'alkyle tel que l'acrylate de méthyle (EMA) ou de butyle (EBA),
- le polystyrène (PS),
- le polychlorure de vinyle (PVC),
- le polyfluorure de vinylidène (PVDF),
- un polymère ou copolymère d'acide lactique (PLA), ou
- un polyhydroxyalkanoate (PHA).

Les matériaux choisis préférentiellement pour constituer les couches minces entourant la couche adhésive sont le PE, le PP, le PET et le PA.

On peut également citer une couche mince constituée d'un polymère thermoplastique, préférentiellement de PE et PP, recouverte d'une couche de moins de 1 µm d'aluminium, d'alumine ou de silice.

L'épaisseur des 2 couches minces adjacentes à la couche adhésive et des autres couches mises en œuvre dans le film multicouche selon l'invention est susceptible de varier dans un large domaine allant de 5 à 150 µm. L'épaisseur totale dudit film est susceptible de varier également dans un large domaine allant de 20 à 400 µm.

L'invention concerne encore un procédé de préparation en continu du film multicouche tel que défini précédemment, comprenant les étapes séquentielles de :
(i) combinaison des composants -NCO et -OH sous la forme d'un mélange adhésif rendu coulable par chauffage à une température appropriée,
(ii) enduction par ledit mélange adhésif d'une première couche mince de matériau sous la forme d'une couche substantiellement continue,
(iii) contrecollage d'une seconde couche mince, sur la première couche mince enduite conformément à l'étape (i), puis
(iv) réticulation du mélange adhésif.

L'invention concerne enfin l'utilisation du film multicouche selon l'invention pour la fabrication d'emballages flexibles. Les films complexes selon l'invention sont en effet utilisables pour la fabrication d'emballages flexibles les plus divers, qui sont mis en forme puis fermés (après l'étape de conditionnement du produit destiné au consommateur) par des techniques de thermoscellage (ou thermosoudage).

L'invention est à présent décrite dans les exemples de réalisation suivants qui sont donnés à titre purement illustratif, et ne sauraient être interprétés pour en limiter la portée.

### Exemple 1 (référence) : Composant -NCO - Préparation d'une composition A constituée de polyuréthanes prépolymères A1

Dans un réacteur fermé de 1 litre, équipé d'une agitation, de moyens de chauffe, d'une sonde de température et relié à une pompe à vide, on introduit sous flux d'azote et à température ambiante : 519,12 g de LUPRANAT^{®} MIPI, 220,74 g de VORANOL^{®} 1010L, 60,08 g de VORANOL^{®} CP450 et 0,08g d'acide phosphorique (solution à 85%).

Ces quantités de réactifs correspondent à un rapport équivalent molaire -NCO/-OH égal à 4,94.

Le mélange est ensuite chauffé à 80°C sous agitation mécanique et maintenu à cette température pendant 4 heures, temps réactionnel permettant d'atteindre une teneur pondérale en fonctions NCO (suivie par titrage potentiométrique) de 17,5 % (poids/poids).

Une attention particulière est portée au contrôle de la température qui ne doit pas dépasser 80°C. Pour cela, l'ajout des polyols peut se faire de manière fractionnée (contrôle de l'exotherme entre chaque ajout de polyol).

Une fois la réaction terminée, le milieu réactionnel est ensuite refroidi à 40°C et maintenu à pression réduite de 20 mbar pour débuller le mélange.

Les poids de réactifs/ingrédients introduits sont ramenées au poids total de la composition A et indiquées en pourcentage dans le tableau 1.

La viscosité Brookfield à 23°C est mesurée et la valeur obtenue est indiquée dans le tableau 1.

### Exemple 2 (référence) : Composant -NCO - Préparation d'une composition A constituée de polyuréthanes prépolymères A1

L'exemple 1 est répété en modifiant les poids de réactifs de manière à obtenir un rapport équivalent molaire -NCO/-OH de 3,67 (cf tableau 1).

La teneur en fonctions -NCO des polyuréthanes prépolymères A1 obtenus et la viscosité Brookfield à 23°C sont également indiquées dans le tableau 1.

### Exemple 3 (référence) : Composant -NCO - Préparation d'une composition A constituée de polyuréthanes prépolymères A1 et d'un polyisocyanate aliphatique A2

L'exemple 1 est répété en remplaçant le LUPRANAT^{®} MIPI par l'ISONATE^{®} M125 et en modifiant les poids de réactifs de manière à obtenir le rapport équivalent molaire -NCO/- OH indiqué dans le tableau.

La teneur en fonctions NCO des polyuréthanes prépolymères A1 obtenus est de 13,9 % (indiquée dans le tableau 1).

Une fois que le taux de fonctions -NCO de A1 a atteint la valeur indiquée, on introduit 80,00g de DESMODUR^{®} XP 2860. Le mélange est maintenu sous agitation à une température comprise entre 70 et 80°C pendant 1 heure. Le milieu réactionnel est ensuite refroidi à 40°C et maintenu à pression réduite de 20 mbar pour débuller le mélange.

La teneur pondérale en fonctions -NCO de la composition A est de 14,5% (poids/poids).

### Exemple 4 (référence) : Composant -OH - Préparation d'une composition B constituée de polyuréthanes prépolymères B1

Dans un réacteur fermé de 1 litre, équipé d'une agitation, de moyens de chauffe, d'une sonde de température et relié à une pompe à vide, on introduit sous flux d'azote et à température ambiante, 80,00 g de DEKATOL^{®} 3008, 208,00 g de DEKATOL^{®} 1105 et 432,00 g de VORANOL^{®} P400. Le mélange est ensuite chauffé à 80°C sous agitation mécanique et maintenu à pression réduite de 20 mbar pendant une heure pour déshydrater les polyols.

On introduit ensuite 80,00 g d'ISONATE^{®} M125.

Ces quantités de réactifs correspondent à un rapport équivalent molaire -NCO/-OH égal à 0,25.

Le mélange est maintenu à 80°C pendant 4 heures, temps réactionnel permettant d'atteindre la consommation totale des fonctions NCO, suivie par titrage potentiométrique.

Une fois la réaction terminée, le milieu réactionnel est ensuite refroidi à 40°C et maintenu à pression réduite de 20 mbar pour débuller le mélange.

Les quantités de réactifs/ingrédients introduits sont ramenées au poids total de la composition B et indiquées en pourcentage dans le tableau 2.

La viscosité Brookfield à 23°C est mesurée et la valeur obtenue indiquée dans le tableau 2.

La teneur en fonctions -OH des polyuréthanes prépolymères B1 obtenus et constsitutifs de la composition B, ainsi que la viscosité Brookfield à 23°C mesurée pour la composition B sont également indiquées dans le tableau 2.

### Exemple 5 (selon l'invention) : Composition adhésive bicomposante obtenue par mélange du composant -NCO de l'exemple 1 et du composant -OH de l'exemple 4

Le composant -NCO de l'exemple 1 est mélangé au composant -OH de l'exemple 4 à raison d'un rapport équivalent molaire -NCO/-OH égal à 1,65 ce qui correspond à un rapport pondéral composant -NCO/composant -OH égal à 100 g de composant -NCO pour 110 g de composant -OH.

Le mélange est effectué à une température de 50°C dans le bac d'alimentation de la machine de complexage et la viscosité Brookfield est mesurée à cette même température sitôt le mélange effectué.

Les données correspondantes sont indiquées dans le tableau 3.

### Exemple 6 et 7 (selon l'invention) : Composition adhésive bicomposante obtenue par mélange du composant -NCO de l'exemple 2 (respectivement de l'exemple 3) et du composant -OH de l'exemple 4

L'exemple 5 est répété en remplaçant le composant -NCO de l'exemple 1 par le composant -NCO de l'exemple 2 (respectivement de l'exemple 3).

Les valeurs du rapport équivalent molaire -NCO/-OH et du rapport pondéral composant -NCO/composant -OH sont indiquées dans le tableau 3, avec la viscosité Brookfield mesurée à 50°C.

### Exemple 8 (selon l'invention) : Film tricouche dont la couche adhésive lie une couche de oPA et une couche de PE :

On utilise pour la couche de PA un film de polyamide biorienté d'épaisseur 15 µm et pour la couche de PE un film de polyéthylène d'épaisseur 50 µm.

Ce film tricouche est obtenu en alimentant le bac d'une machine de complexage de type Nordmeccanica par la composition adhésive bicomposants de l'exemple 5.

Ladite machine de complexage est pourvue d'un dispositif d'enduction de type rouleau avec bac ouvert, fonctionnant à une température de 50°C et à une vitesse de défilement de 50 m/minute ; la couche adhésive liant les couches de PA et de PE présente une épaisseur allant de 2 g/m².

Immédiatement après sa fabrication, ce film tricouche est stocké à une température de 23°C et sous une atmosphère à 50 % d'humidité relative (HR).

Ce film tricouche est soumis aux tests suivants.

### A. Détermination de la durée de réticulation :

### A.1. Principe du test :

Ce test a pour but de mesurer la durée (exprimée en jours) nécessaire à la réticulation de l'adhésif bicomposant constitutif de la couche adhésive du film tricouche, à compter de la fabrication dudit film par complexage.

Cette durée est évaluée par le nombre de jours nécessaire pour que le film soit suffisamment cohésif, et, plus précisément, pour que la cohésion dudit film, mesurée par le test de pelage à 180° (décrit ci-après), soit supérieure à une valeur de référence égale à 3 N/15 mm.

### A.2. Echantillonnage du film :

Un échantillon est prélevé chaque jour sur le film tricouche qui est maintenu dans les conditions de stockage à 23°C et 50 % d'HR précisées ci-dessus. Cet échantillon est soumis au test de pelage à 180°.

### A.3. Description du test de pelage à 180° :

Le test de pelage à 180° est tel que décrit dans la norme française NF T 54-122. Le principe de ce test consiste en la détermination de la force nécessaire à la séparation (ou pelage) de 2 couches individuelles de films liées par l'adhésif bicomposant.

Une éprouvette de forme rectangulaire de 15 mm de large et d'environ 10 cm de long est découpée dans le film bicouche. On décolle manuellement à partir de l'extrémité de cette éprouvette, et sur environ 2 cm, les 2 couches individuelles de film comprises dans cette bande et les 2 extrémités libres ainsi obtenues sont fixées sur deux dispositifs d'attache reliés, respectivement, à une partie fixe et une partie mobile d'un appareil de traction qui sont situées sur un axe vertical.

Alors qu'un mécanisme d'entraînement communique à la partie mobile une vitesse uniforme de 100 mm/minute, conduisant au décollement des 2 couches dont les extrémités décollées se déplacent progressivement selon un axe vertical en formant un angle de 180°, la partie fixe -reliée à un dynamomètre- mesure la force supportée par l'éprouvette ainsi maintenue, et exprimée en N/15mm.

### A.4. Résultat :

La durée de réticulation est de 2 jours.

### B. Détermination de la cohésion :

Un échantillon est prélevé sur le film tricouche, qui est maintenu dans les conditions de stockage à 23°C et 50 % d'HR précisées ci-dessus, après 30 jours de stockage.

Cet échantillon est soumis au test de pelage à 180° décrit en A.3.

La cohésion est de 6,55 N/15 mm.

### C. Détermination de la quantité de Primary Aromatic Amines (PAA) :

Un échantillon est prélevé sur le film tricouche, qui est maintenu dans les conditions de stockage à 23°C et 50 % d'HR précisées ci-dessus, après 1 jour de stockage, puis après 2 jours de stockage.

Le film tricouche ainsi échantillonné est façonné en sachets de forme carrée de 20 cm de côté par thermoscellage sur 3 côtés, un côté restant ouvert. Les sachets sont remplis avec 200 ml d'une solution aqueuse d'acide acétique (3% en poids).

Les sachets sont ensuite thermoscellés et placés dans une étuve pendant 2h à 70°C.

Les sachets sont alors ouverts, afin d'en extraire la solution aqueuse et de l'analyser.

Les PAA sont dosées par spectrométrie UV à 550 nm, après diazotation et réaction avec le chlorhydrate de N-Naphthyl-1-ethylene diamine, puis concentration de la couleur sur colonne phase solide.

Le résultat est exprimé en mg d'aniline par kg de la solution aqueuse d'acide acétique conditionnée dans les sachets, et présenté en ppb.

On obtient après 1 jour de stockage du film tricouche : 18 ppb

On obtient après 2 jours de stockage du film tricouche : 3 ppb.

### Exemples 9 et 10 (selon l'invention) : Film tricouche dont la couche adhésive lie une couche de oPA et une couche de PE :

On répète l'exemple 8 en remplaçant la composition adhésive bicomposante de l'exemple 5, par celle, respectivement, de l'exemple 6 et 7.

La durée de réticulation, la cohésion, et la quantité de PAA des films tricouches correspondants sont indiqués dans le Tableau 3.

### Exemple 11 (selon l'invention) : Film tricouche dont la couche adhésive lie une couche de PET métallisé et une couche de PE :

On fabrique tout d'abord un film tricouche en répétant l'exemple 8, sauf que l'on remplace la couche de polyamide biorienté d'épaisseur 15 µm par une couche d'épaisseur 9 µm constituée de PET métallisée en surface par une couche d'aluminium.

La cohésion du film tricouche ainsi obtenu est déterminée en répétant le protocole du § B de l'exemple 8.

La cohésion est de 1,74 N/15 mm.

### Exemples 12 et 13 (selon l'invention) : Film tricouche dont la couche adhésive lie une de PET métallisé et une couche de PE :

On répète l'exemple 11 en remplaçant la composition adhésive bicomposante de l'exemple 5, par celle, respectivement, de l'exemple 6 et 7.

La cohésion du film tricouche ainsi obtenu est indiquée dans le Tableau 3.

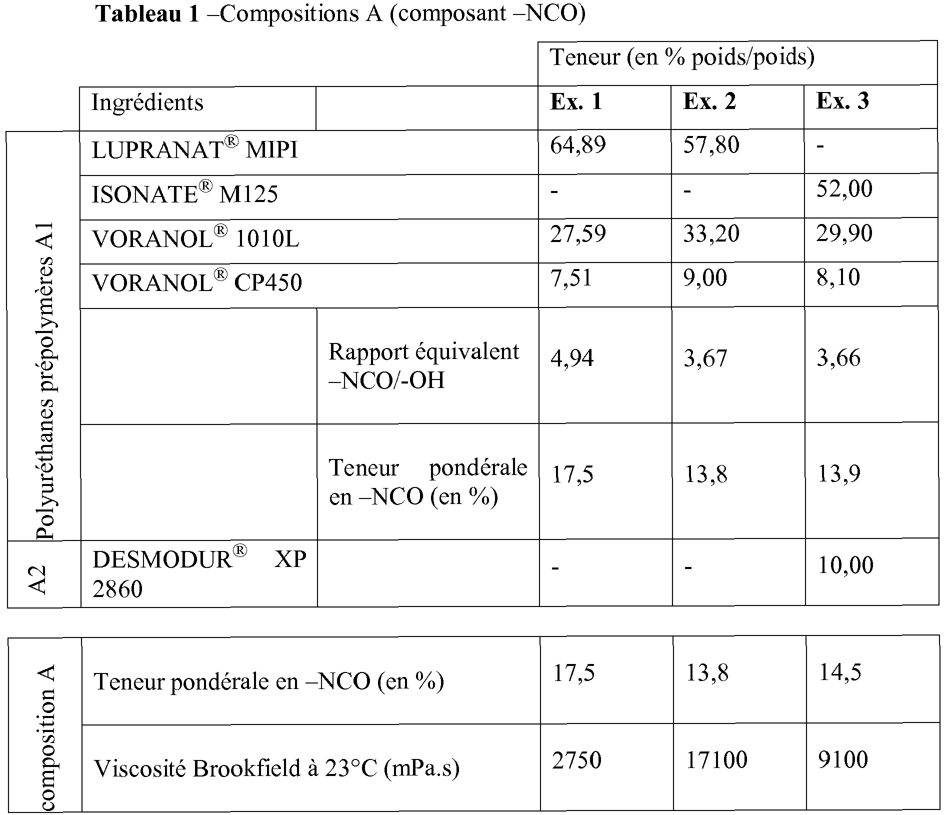

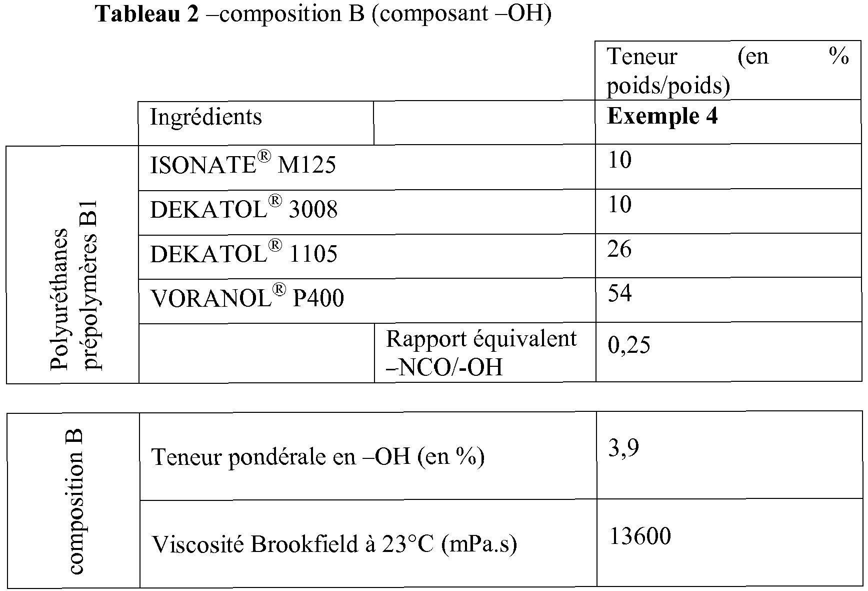

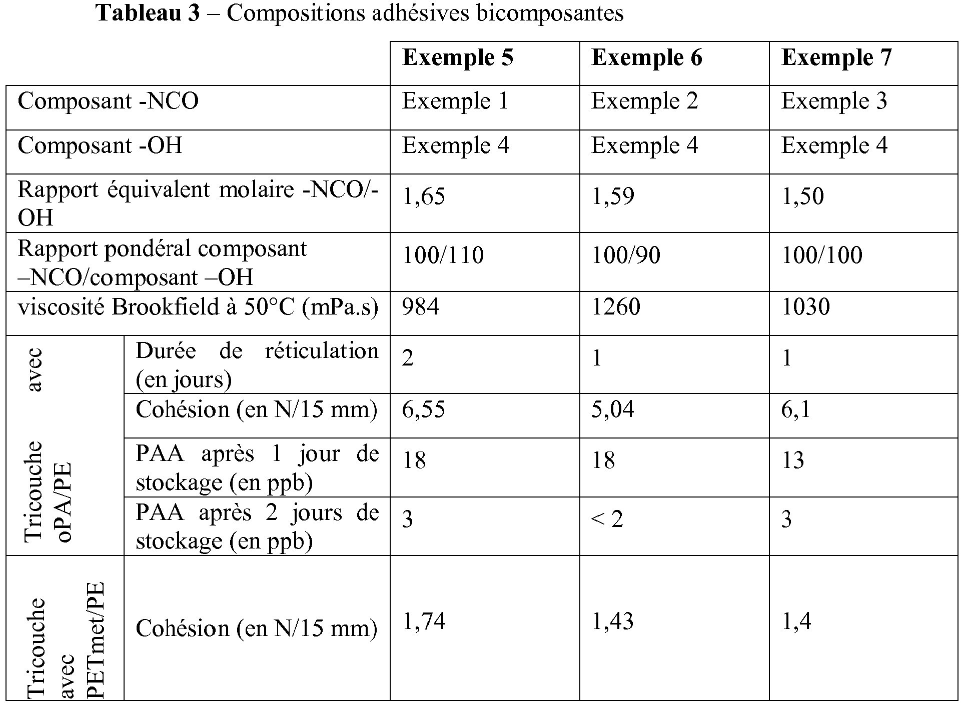

## Revendications

1. Composition adhésive bicomposante à base de polyuréthane, comprenant un composant -NCO et un composant -OH tels que :
- le composant -NCO est une composition A comprenant des polyuréthanes prépolymères A1 comprenant au moins deux groupements terminaux -NCO, A1 étant obtenu par réaction de polyaddition entre :
- une composition A1.C1 de diisocyanate de diphénylméthane (MDI) comprenant au moins 35 % en poids de l'isomère 4,4', ledit pourcentage étant exprimé sur la base du poids total de ladite composition, et
- une composition A1.C2 de polyols comprenant un polyéther diol PE_{A}¹ de masse molaire Mn comprise entre 800 et 1200 g/mole et un polyéther triol PE_{A}² de masse molaire Mn comprise entre 350 et 550 g/mole, dans une quantité correspondant à un rapport poids/poids PE_{A}²/(PE_{A}¹ + PE_{A}²) compris entre 15 et 30 %,
- les quantités de A1.C1 et A1.C2 mises en œuvre étant telles que le rapport équivalent molaire -NCO/-OH est compris entre 2,5 et 6,5 ;
- le composant -OH est une composition B comprenant des polyuréthanes prépolymères B1 comprenant au moins deux groupements terminaux -OH, B1 étant obtenu par réaction de polyaddition entre :
- une composition B1.C1 de diisocyanate de diphénylméthane (MDI) comprenant au moins 35 % en poids d'isomère 4,4', ledit pourcentage étant exprimé sur la base du poids total de ladite composition, et
- une composition B1.C2 de polyols de fonctionnalité 2 comprenant, sur la base du poids total de ladite composition :
- de 38 à 42 % en poids d'une composition B1.C2.D comprenant un polyester diol aliphatique PES_{B}¹ de masse molaire Mn comprise entre 800 et 1200 g/mole et un polyester diol partiellement aromatique PES_{B}² de masse molaire Mn comprise entre 1000 et 1400 g/mole, dans une quantité correspondant à un rapport poids/poids PES_{B}¹ / PES_{B}² compris entre 0,35 et 0,45 ; et
- de 58 à 62 % en poids d'un polyéther diol aliphatique PE_{B} de masse molaire Mn comprise entre 350 et 550 g/mole ;
- les quantités de B1C1 et B1C2 mises en œuvre étant telles que le rapport équivalent molaire -NCO/-OH est compris entre 0,05 et 0,50 ;
- étant précisé en outre que les quantités des composants -NCO et -OH de ladite composition adhésive bicomposante sont telles que le rapport équivalent molaire -NCO / -OH est compris dans un domaine allant de 1,5 à 1,7.

2. Composition adhésive bicomposante selon la revendication 1, **caractérisée en ce que** la teneur en isomère 2,2' de la composition A1.C1 de MDI mise en œuvre pour la préparation de A1 est inférieure à 1 % en poids, sur la base de son poids total.

3. Composition adhésive bicomposante selon l'une des revendications 1 ou 2, **caractérisée en ce que** la composition A1.C1 de MDI comprend au moins 49 % en poids de l'isomère 4,4'.

4. Composition adhésive bicomposante selon l'une des revendications 1 à 3, **caractérisée en ce que** le polyéther diol PE_{A}¹ et le polyéther triol PE_{A}² mis en œuvre dans la composition de polyols A1.C2 sont des polypropylène glycol de fonctionnalités respectives 2 et 3.

5. Composition adhésive bicomposante selon l'une des revendications 1 à 4, **caractérisée en ce que** la teneur pondérale des polyuréthanes prépolymères A1 en groupements terminaux -NCO varie dans un domaine allant de 9 à 18 %.

6. Composition adhésive bicomposante selon l'une des revendications 1 à 5, **caractérisée en ce que** la composition A, en tant que composant -NCO, a une teneur en polyuréthanes prépolymères A1 d'au moins 98 %.

7. Composition adhésive bicomposante selon l'une des revendications 1 à 5, **caractérisée en ce que** la composition A, en tant que composant -NCO, comprend également un polyisocyanate aliphatique A2 dont la fonctionnalité en groupements terminaux -NCO est comprise dans un domaine allant de 2 à 3,5 et dont la teneur en -NCO, exprimée en poids sur la base du poids de A2, est comprise entre 17 et 27%.

8. Composition adhésive bicomposante selon la revendication 7, **caractérisée en ce que** le polyisocyanate aliphatique A2 est porteur d'une fonction allophanate.

9. Composition adhésive bicomposante selon l'une des revendications 1 à 8, **caractérisée en ce que** la teneur totale en groupe -NCO, exprimée en % poids sur la base du poids total de la composition A, est comprise dans un domaine allant de 13 à 18 %.

10. Composition adhésive bicomposante selon l'une des revendications 1 à 9, **caractérisée en ce que** la teneur en groupe -OH, exprimée en % poids sur la base du poids total de la composition B, est comprise dans un domaine allant de 3 à 5 %.

11. Composition adhésive bicomposante selon l'une des revendications 1 à 10, **caractérisée en ce que** la viscosité mesurée à 23°C de chacun des 2 composants -NCO et -OH est inférieure ou égale à 25 Pa.s, ladite viscosité étant mesurée à l'aide d'un viscosimètre Brookfield selon la norme ISO 2555.

12. Composition adhésive bicomposante selon l'une des revendications 1 à 11, **caractérisée en ce que** sa viscosité mesurée à 50°C est, au moment du mélange de ses 2 composants, comprise dans un domaine allant de 500 à 2000 mPa.s, ladite viscosité étant mesurée à l'aide d'un viscosimètre Brookfield selon la norme ISO 2555.

13. Film multicouche comprenant 2 couches minces de matériau liées entre elles par une couche continue, **caractérisé en ce que** ladite couche est constituée par la composition adhésive bicomposante telle que définie dans l'une des revendications 1 à 12, à l'état réticulé, à raison d'une quantité inférieure à 10 g/m².

14. Procédé de préparation en continu du film multicouche tel que défini dans la revendication 13, comprenant les étapes séquentielles de :
(i) combinaison des composants -NCO et -OH sous la forme d'un mélange adhésif rendu coulable par chauffage à une température appropriée,
(ii) enduction par ledit mélange adhésif d'une première couche mince de matériau sous la forme d'une couche substantiellement continue,
(iii) contrecollage d'une seconde couche mince, sur la première couche mince enduite conformément à l'étape (i), puis
(iv) réticulation du mélange adhésif.

15. Utilisation du film multicouche selon l'invention pour la fabrication d'emballages flexibles.

## Patentansprüche

1. Zweikomponentenklebstoff-Zusammensetzung auf der Basis von Polyurethan, umfassend eine -NCO Komponente und eine -OH Komponente derart, dass:
- die -NCO Komponente eine Zusammensetzung A ist, die Polyurethan-Präpolymere A1 umfasst, die mindestens zwei endständige Gruppen -NCO umfassen, wobei A1 erhalten wird durch Polyadditionsreaktion zwischen:
- einer Zusammensetzung A1.C1 von Diphenylmethandiisocyanat (MDI), die mindestens 35 Gew.-% des 4,4'-Isomers umfasst, wobei sich die Prozentangabe auf das Gesamtgewicht der Zusammensetzung bezieht, und
- einer Zusammensetzung A1.C2 von Polyolen, die ein Polyetherdiol PE_{A}¹ mit einer Molmasse Mn zwischen 800 und 1200 g/mol und ein Polyethertriol PE_{A}² mit einer Molmasse Mn zwischen 350 und 550 g/mol in einer Menge entsprechend einem Verhältnis Masse/Masse PE_{A}²/ (PE_{A}¹ + PE_{A}²) zwischen 15 und 30 % umfasst,
- wobei die eingesetzten Mengen von A1.C1 und A1.C2 derart sind, dass das Verhältnis der Moläquivalente -NCO/-OH zwischen 2,5 und 6,5 beträgt;
die -OH Komponente eine Zusammensetzung B ist, die Polyurethan-Präpolymere B1 umfasst, die mindestens zwei endständige Gruppen -OH umfassen, wobei B1 erhalten wird durch Polyadditionsreaktion zwischen:
- einer Zusammensetzung B1.C1 von Diphenylmethandiisocyanat (MDI), die mindestens 35 Gew.-% des 4,4'-Isomers umfasst, wobei sich die Prozentangabe auf das Gesamtgewicht der Zusammensetzung bezieht, und
- einer Zusammensetzung B1.C2 von Polyolen mit einer Funktionalität von 2, die bezogen auf das Gesamtgewicht der Zusammensetzung Folgendes umfasst:
- 38 bis 42 Gew.-% einer Zusammensetzung B1.C2.D, die ein aliphatisches Polyesterdiol PES_{B}¹ mit einer Molmasse Mn zwischen 800 und 1200 g/mol und ein teilaromatisches Polyesterdiol PES_{B}² mit einer Molmasse Mn zwischen 1000 und 1400 g/mol in einer Menge entsprechend einem Verhältnis Masse/Masse PES_{B}¹/PES_{B}² zwischen 0,35 und 0,45 umfasst, und
- 58 bis 62 Gew.-% eines aliphatischen Polyetherdiols PE_{B} mit einer Molmasse Mn zwischen 350 und 550 g/mol;
- wobei die eingesetzten Mengen von B1C1 und B1C2 derart sind, dass das Verhältnis der Moläquivalente -NCO/-OH zwischen 0,05 und 0,50 beträgt;
- wobei ferner, genauer gesagt, die Mengen der -NCO und der -OH Komponente der Zweikomponentenklebstoff-Zusammensetzung derart sind, dass das Verhältnis der Moläquivalente -NCO/-OH in einem Bereich von 1,5 bis 1,7 liegt.

2. Zweikomponentenklebstoff-Zusammensetzung nach Anspruch 1, **dadurch gekennzeichnet, dass** der Gehalt an 2,2'-Isomer der zur Herstellung von A1 eingesetzten MDI-Zusammensetzung A1.C1, bezogen auf ihr Gesamtgewicht, weniger als 1 Gew.-% beträgt.

3. Zweikomponentenklebstoff-Zusammensetzung nach einem der Ansprüche 1 oder 2, **dadurch gekennzeichnet, dass** die MDI-Zusammensetzung A1.C1 mindestens 49 Gew.-% des 4,4'-Isomers umfasst.

4. Zweikomponentenklebstoff-Zusammensetzung nach einem der Ansprüche 1 bis 3, **dadurch gekennzeichnet, dass** das Polyetherdiol PE_{A}¹ und das Polyethertriol PE_{A}², die in der Zusammensetzung von Polyolen A1.C2 eingesetzt werden, Propylenglykole mit der Funktionalität 2 bzw. 3 sind.

5. Zweikomponentenklebstoff-Zusammensetzung nach einem der Ansprüche 1 bis 4, **dadurch gekennzeichnet, dass** der gewichtsbezogene Gehalt an Polyurethan-Präpolymeren A1 mit endständigen Gruppen -NCO in einem Bereich von 9 bis 18 % variiert.

6. Zweikomponentenklebstoff-Zusammensetzung nach einem der Ansprüche 1 bis 5, **dadurch gekennzeichnet, dass** die Zusammensetzung A als -NCO Komponente einen Gehalt an Polyurethan-Präpolymeren A1 von mindestens 98 % aufweist.

7. Zweikomponentenklebstoff-Zusammensetzung nach einem der Ansprüche 1 bis 5, **dadurch gekennzeichnet, dass** die Zusammensetzung A als -NCO Komponente außerdem ein aliphatisches Polyisocyanat A2 umfasst, dessen Funktionalität im Hinblick auf endständige Gruppen -NCO in einem Bereich von 2 bis 3,5 liegt und dessen Gehalt an -NCO, ausgedrückt als Gewicht bezogen auf das Gewicht von A2, zwischen 17 und 27 % beträgt.

8. Zweikomponentenklebstoff-Zusammensetzung nach Anspruch 7, **dadurch gekennzeichnet, dass** das aliphatische Polyisocyanat A2 eine Allophanat-Funktion trägt.

9. Zweikomponentenklebstoff-Zusammensetzung nach einem der Ansprüche 1 bis 8, **dadurch gekennzeichnet, dass** der Gesamtgehalt an Gruppe -NCO, ausgedrückt in Gewichts-% bezogen auf das Gesamtgewicht der Zusammensetzung A, in einem Bereich von 13 bis 18 % liegt.

10. Zweikomponentenklebstoff-Zusammensetzung nach einem der Ansprüche 1 bis 9, **dadurch gekennzeichnet, dass** der Gehalt an Gruppe -OH, ausgedrückt in Gewichts-% bezogen auf das Gesamtgewicht der Zusammensetzung B, in einem Bereich von 3 bis 5 % liegt.

11. Zweikomponentenklebstoff-Zusammensetzung nach einem der Ansprüche 1 bis 10, **dadurch gekennzeichnet, dass** die bei 23°C gemessene Viskosität jeder der 2 -NCO und -OH Komponenten kleiner oder gleich 25 Pa·s ist, wobei die Viskosität mithilfe eines Brookfield-Viskosimeters gemäß der Norm ISO 2555 gemessen wird.

12. Zweikomponentenklebstoff-Zusammensetzung nach einem der Ansprüche 1 bis 11, **dadurch gekennzeichnet, dass** ihre bei 50 °C gemessene Viskosität im Moment des Mischens ihrer 2 Komponenten in einem Bereich von 500 bis 2000 mPa·s liegt, wobei die Viskosität mithilfe eines Brookfield-Viskosimeters gemäß der Norm ISO 2555 gemessen wird.

13. Mehrschichtfolie, umfassend 2 dünnen Materialschichten, die miteinander durch eine kontinuierliche Schicht verbunden sind, **dadurch gekennzeichnet, dass** die Schicht aus der Zweikomponentenklebstoff-Zusammensetzung nach einem der Ansprüche 1 bis 12 im vernetzten Zustand in einer Menge von weniger als 10 g/m² besteht.

14. Verfahren zur kontinuierlichen Herstellung der Mehrschichtfolie nach Anspruch 13, das die aufeinander folgenden Schritte umfasst:
(i) Vereinigen der -NCO und der -OH Komponente in Form einer Klebstoffmischung, die durch Erhitzen auf eine geeignete Temperatur fließfähig gemacht wird,
(ii) Beschichten einer ersten dünnen Materialschicht mit der Klebstoffmischung in Form einer im Wesentlichen kontinuierlichen Schicht,
(iii) Aufkaschieren einer zweiten Dünnschicht auf die gemäß Schritt (i) beschichtete erste Dünnschicht und
(iv) Vernetzen der Klebstoffmischung.

15. Verwendung der Mehrschichtfolie gemäß der Erfindung zur Herstellung flexibler Verpackungen.

## Claims

1. Two-component polyurethane-based adhesive composition comprising an -NCO component and an -OH component, such that:
- the -NCO component is a composition A comprising polyurethane prepolymers A1 comprising at least two -NCO end groups, A1 being obtained by polyaddition reaction between:
- a composition A1.C1 of diphenylmethane diisocyanate (MDI) comprising at least 35% by weight of the 4,4' isomer, said percentage being expressed on the basis of the total weight of said composition, and
- a composition A1.C2 of polyols comprising a polyether diol PE_{A}¹ with a molar mass Mn of between 800 and 1200 g/mol and a polyether triol PE_{A}² with a molar mass Mn of between 350 and 550 g/mol, in an amount corresponding to a PE_{A}²/ (PE_{A}¹ + PE_{A}²) weight/weight ratio of between 15 and 30%,
- the amounts of A1.C1 and A1.C2 used being such that the -NCO/-OH molar equivalent ratio is between 2.5 and 6.5;
- the -OH component is a composition B comprising polyurethane prepolymers B1 comprising at least two -OH end groups, B1 being obtained by polyaddition reaction between:
- a composition B1.C1 of diphenylmethane diisocyanate (MDI) comprising at least 35% by weight of the 4,4' isomer, said percentage being expressed on the basis of the total weight of said composition, and
- a composition B1.C2 of polyols with a functionality of 2 comprising, on the basis of the total weight of said composition:
- from 38 to 42% by weight of a composition B1.C2.D comprising an aliphatic polyester diol PES_{B}¹ with a molar mass Mn of between 800 and 1200 g/mol and a partially aromatic polyester diol PES_{B}² with a molar mass Mn of between 1000 and 1400 g/mol, in an amount corresponding to a PES_{B}¹/PES_{B}² weight/weight ratio of between 0.35 and 0.45; and
- from 58 to 62% by weight of an aliphatic polyether diol PE_{B} with a molar mass Mn of between 350 and 550 g/mol;
- the amounts of B1C1 and B1C2 used being such that the -NCO/-OH molar equivalent ratio is between 0.05 and 0.50;
- it also being specified that the amounts of the -NCO and -OH components of said two-component adhesive composition are such that the -NCO/-OH molar equivalent ratio is within a range extending from 1.5 to 1.7.

2. Two-component adhesive composition according to Claim 1, **characterized in that** the 2,2' isomer content of the MDI composition A1.C1 used in the preparation of A1 is less than 1% by weight, on the basis of the total weight thereof.

3. Two-component adhesive composition according to either of Claims 1 and 2, **characterized in that** the MDI composition A1.C1 comprises at least 49% by weight of the 4,4' isomer.

4. Two-component adhesive composition according to one of Claims 1 to 3, **characterized in that** the polyether diol PE_{A}¹ and the polyether triol PE_{A}² used in the polyol composition A1.C2 are polypropylene glycols with the respective functionalities 2 and 3.

5. Two-component adhesive composition according to one of Claims 1 to 4, **characterized in that** the -NCO end group weight content of the polyurethane prepolymers A1 varies in a range extending from 9 to 18%.

6. Two-component adhesive composition according to one of Claims 1 to 5, **characterized in that** the composition A, as -NCO component, has a content of polyurethane prepolymers A1 of at least 98%.

7. Two-component adhesive composition according to one of Claims 1 to 5, **characterized in that** the composition A, as -NCO component, also comprises an aliphatic polyisocyanate A2, the -NCO end group functionality of which is within a range extending from 2 to 3.5 and the -NCO content of which, expressed by weight on the basis of the weight of A2, is between 17 and 27%.

8. Two-component adhesive composition according to Claim 7, **characterized in that** the aliphatic polyisocyanate A2 bears an allophanate function.

9. Two-component adhesive composition according to one of Claims 1 to 8, **characterized in that** the total -NCO group content, expressed as % by weight on the basis of the total weight of the composition A, is within a range extending from 13 to 18%.

10. Two-component adhesive composition according to one of Claims 1 to 9, **characterized in that** the -OH group content, expressed as % by weight on the basis of the total weight of the composition B, is within a range extending from 3 to 5%.

11. Two-component adhesive composition according to one of Claims 1 to 10, **characterized in that** the viscosity, measured at 23°C, of each of the two -NCO and -OH components is less than or equal to 25 Pa.s, said viscosity being measured with the aid of a Brookfield viscometer according to the standard ISO 2555.

12. Two-component adhesive composition according to one of Claims 1 to 11, **characterized in that** the viscosity thereof, measured at 50°C, at the time of mixing its 2 components, is within a range extending from 500 to 2000 mPa.s, said viscosity being measured with the aid of a Brookfield viscometer according to the standard ISO 2555.

13. Multilayer film comprising 2 thin layers of material linked to one another by a continuous layer, **characterized in that** said layer is constituted by the two-component adhesive composition as defined in one of Claims 1 to 12, in the crosslinked state, in an amount of less than 10 g/m².

14. Process for continuously preparing the multilayer film as defined in Claim 13, comprising the sequential steps of:
(i) combining the -NCO and -OH components in the form of an adhesive mixture made flowable by heating at a suitable temperature,
(ii) coating, with said adhesive mixture, a first thin layer of material in the form of a substantially continuous layer,
(iii) laminating a second thin layer, on the first thin layer coated in accordance with step (i), then
(iv) crosslinking the adhesive mixture.

15. Use of the multilayer film according to the invention for the production of flexible packagings.
